# EUROPEAN PATENT APPLICATION

(11) **EP 0 642 937 A1**
(43) Date of publication of application: **15.03.1995**
(21) Application number: 94111979.4
(22) Date of filing: 01.08.1994
(51) Int. Cl.: B60C 23/04

(54) **Device for monitoring the pressure of pneumatic tyres on motor vehicles while driving**

(30) Priority: 01.09.1993 IT MI931872
(71) Applicant: TELESIGNAL srl, I-20010 Cornaredo (Milano) (IT)
(72) Inventor: Fiorentini, Antonio, I-20151 Milano (IT); Buratti, Maurizio, I-21015 Lonate Pozzuolo (Varese) (IT)
(74) Representative: de Pasquale, Carlo

(57) **Abstract**

The invention relates to a device for monitoring the pressure of pneumatic tyres on motor vehicles while driving, and consists in having combined a pressure sensor (4) mounted on the tyre, equipped with suitable means (7) for neutralizing the effects of centrifugal force, with a permanent magnet (5) designed to follow the movements of the sensor, so that while the wheel revolves, the magnet induces, at each revolution of the tyre, in a induction coil (10) located on a fixed part of the suspension, an impulse of which the time integral correlates directly to the pressure of the tyre, as a result of which, by processing the impulses received by the induction coil by means of a microprocessor device, it is possible to energize a signal in the driver's cab, should the pressure of the tyre stray outside a pre-determined range.

## Description

The present invention relates to a device for monitoring the pressure of pneumatic tyres on motor vehicles while driving.

The development of private motoring and commercial transport by road has gradually brought about extremely congested and dangerous traffic conditions, which have caused a widespread increase in road accidents.

A significant proportion of these accidents may be due to the inadequate state of efficiency of several parts of the motor vehicle.

Sensitization to these issues on the part of the authorities responsible for the management of traffic, and users and manufacturers of motor vehicles, has created the conditions of synergy necessary to promote the research and development of all means aimed at increasing the reliability of motor vehicles.

At the same time, levels of awareness of the state of efficiency of cars and/or trucks have been considerably advanced as a result of the increasing use of electronic monitoring of vehicles' vital components.

An important vehicle component, particularly for commercial vehicles, on the development of which the automotive industry is now focusing its attention, is a device capable of providing the driver, while driving, with information regarding the state of the tyres.

Until now, such a device has not been produced because of the objective difficulties encountered, and the economic incompatibility of the solutions found to date.

A known device exists, which is based on radio transmission, but which has not yet graduated beyond the laboratory testing stage both because of its cost, and because there are founded doubts with regard to its reliability due to the choice of radio frequencies and possible interference.

The present invention is proposed as a means of meeting this need without necessitating significant modifications to the current geometry of the components in question, and without imposing levels of technological sophistication that might give rise to doubts about the system.

The invention consists in having combined a pressure sensor mounted on the tyre and hence rotating with the tyre, equipped with suitable means for neutralizing the effects of centrifugal force, with a permanent magnet designed to follow the movements of the sensor, so that while the wheel revolves, the magnet induces, at each revolution of the tyre, in a conduction coil located on a fixed part of the suspension, an impulse of which the time integral correlates directly to the pressure of the tyre, as a result of which the induction coil transmits the impulses carrying the information, to a central unit located in the driver's cab and equipped with a microprocessor. Therefore, once the device is calibrated within a certain range of variation in tyre pressure, any further variation in pressure outside the aforementioned range causes the sensor to move, thus causing the magnet to move in relation to the induction coil, resulting in a variation of the impulse to the induction coil and energizing of a signal in the driver's cab.

The invention will be better understood with the aid of a description of an example embodiment, given solely by way of example and not by way of limitation, and illustrated by the two drawings in which:
fig. 1 -reproduces a section of the device according to the example embodiment of the invention;
fig. 2 -indicates the reciprocal position of the sensor and the coil, and a possible installation of the device on the motor vehicle.

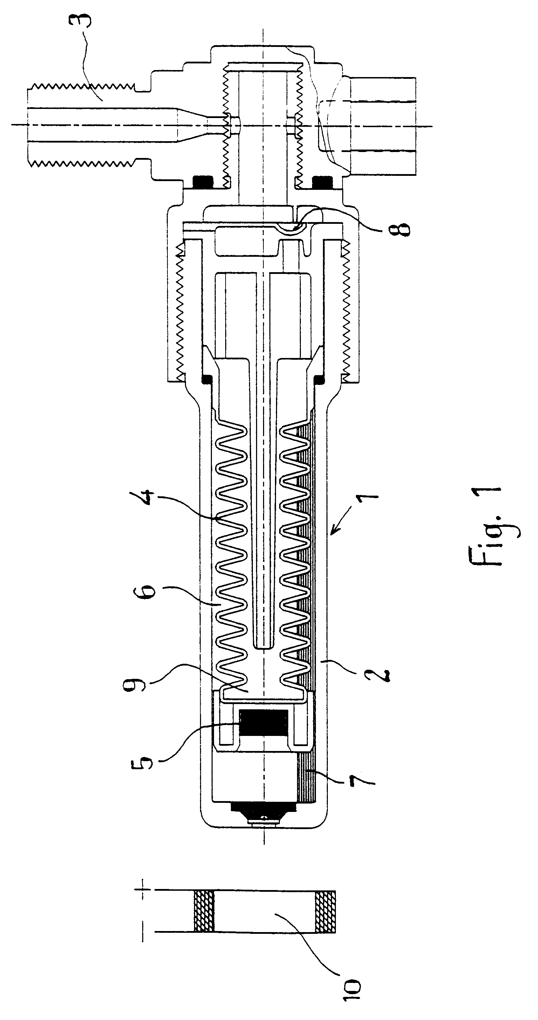

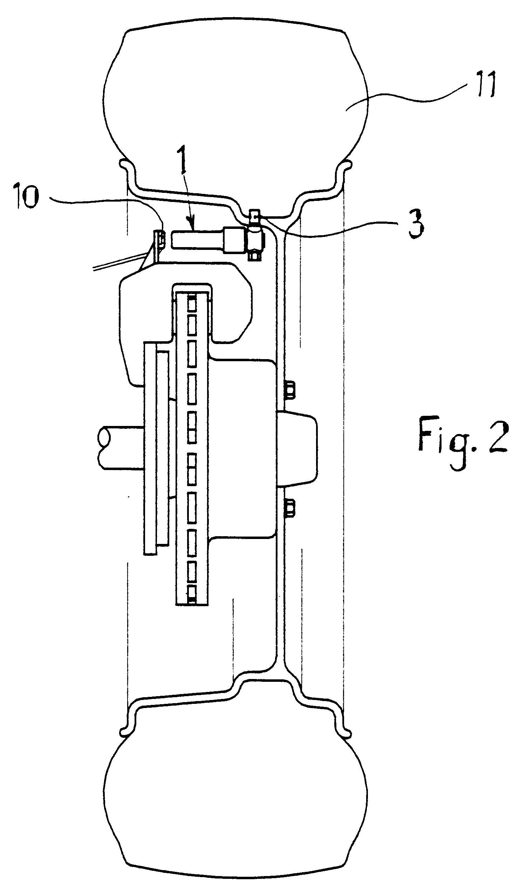

With reference to fig. 1 and 2, the device 1 consists of a casing 2 which houses a sensor consisting of bellows 4, to one end of which is connected a permanent magnet 5, designed to follow the axial movements of the bellows 4 that occur as the pressure of the air contained in the tyre varies.

The casing 2 is connected by means of coupling 3 to a housing fashioned in the wheel rim - or even constructed with the wheel rim itself - in such a way that the inside of the coupling 3 puts the air contained in the tyre 11 in communication with the inside 9 of the bellows 4.

In the cavity 6, between the exterior of the bellows 4 and the interior of the casing 2, a liquid 7 is introduced, which fulfills the function of hydrostatic suspension, and is of suitable density and level to support the elastic bellows 4 in a horizontal position during rotation of the device, in such a way as to neutralize the effect of centrifugal force.

In addition to the liquid 7, a gas is then introduced into the cavity 6, at a pre-determined pressure such as to balance the tyre pressure in the chamber 9 inside the bellows 4.

A safety valve 8 is disposed between the coupling 3 and the inside of the bellows 4; the valve has the function of shutting off communication between the inside of the tyre 11 and the inside of the bellows 9 in order to prevent the tyre from deflating in the event of breakage of the device.

The equilibrium of the pressures between the chambers 6 and 9 defines the position of equilibrium of the magnet 5. The device is completed by a induction coil 10 mounted on the fixed part of the vehicle's suspension along the same axis as the longitudinal axis of the device and hence of the bellows 4 and magnet 5.

While the wheel rotates, the magnet induces, at each revolution of the tyre, in the induction coil 10, an impulse of which the time integral correlates directly to the pressure of the tyre.

This impulse cannot be disturbed by any foreign body that might interpose itself between the magnet and the induction coil, insofar as encrustations of mud, residues of oil, paper etc. are not capable of altering the magnetic field of the magnet 5, and in any event, while the tyre rotates, the centrifugal force induced (of the order of about 10 G) is sufficient to expel any foreign body that may find its way between the casing 2 of the sensor and the coil 10.

At each revolution of the wheel, and hence of the device connected to it, for equal pressures, an impulse is generated which varies in degree and duration according to the speed of rotation of the device, but which maintains its area unaltered. The area can only vary when the tyre pressure varies and when consequently the bellows move axially in either direction, with resulting change in the impulse to the coil 10.

The induction coil is connected to a microprocessor which analyses the data and transmits them to an illuminated display which indicates the state of equilibrium, or absence thereof, of the tyre. The device can obviously be equipped with an alarm signal to be triggered should the tyre pressure stray outside the range of equilibrium.

The device is operated as follows: once fitted, the working pressure of the device is calibrated to a range within which it will not intervene, according to the type of tyre, by adjusting the pressure of the tyre and the pressure of the gas introduced into the chamber 6. Subsequently, the device's reference pressure datum and a range above and below the reference value within which the device is not to intervene, is communicated to the microprocessor.

Should the tyre undergo any variation in pressure outside the range of non-intervention, due to any type of anomaly during use (the tyre deflating as a result of a puncture, or an increase in pressure prior to a blow-out), the bellows 4 are caused to move backwards or forwards, moving the magnet 5 with them, thus inducing a wave of different area in the induction coil 10, and alerting the device itself.

## Claims

1. Device for monitoring the pressure of pneumatic tyres on motor vehicles while driving, characterized in that it has combined a tyre pressure sensor (4), mounted on the tyre (11), and hence rotating with the tyre, and equipped with suitable means (7) for neutralizing the effects on the sensor (4) of centrifugal force, with a permanent magnet (5) designed to follow the movements of the sensor, so that while the wheel revolves, the magnet (5) induces, at each revolution of the tyre, in a induction coil (10) located on a fixed part of the suspension, an impulse of which the time integral correlates directly to the pressure of the tyre 11, as a result of which the induction coil (10) transmits the impulses carrying the information, to a central unit located in the driver's cab and equipped with a microprocessor. Therefore, once the device is calibrated within a range of variation in tyre pressure, any further variation in pressure outside the aforementioned range causes the sensor (4) to move, thus causing the magnet (5) to move in relation to the induction coil (10), resulting in a variation of the impulse to the induction coil (10) and energizing of a signal in the driver's cab.

2. Device for monitoring the pressure of pneumatic tyres as in claim 1, characterized in that the sensor device consists of bellows (4) to one end of which is connected a permanent magnet (5) designed to follow the axial movements of the bellows (4) that occur as the pressure of the air contained in the tyre (11) varies, and contained in a casing (2) connected by means of a coupling (3) to a housing fashioned in the wheel rim - or even constructed with the wheel rim itself - in such a way that the inside of the coupling (3) puts the air contained in the tyre (11) in communication with the inside (9) of the bellows (4).

3. Device for monitoring the pressure of pneumatic tyres as in claims 1 and 2, characterized in that, for the purpose of neutralizing the effects of centrifugal force on the sensor (4), in the cavity (6), between the outer wall of the bellows (4) and the inner wall of the casing (2), a liquid (7) is introduced, which fulfills the function of hydrostatic suspension, and is of suitable density and level to support the elastic bellows (4) in a horizontal position during rotation of the device.

4. Device for monitoring the pressure of pneumatic tyres as in claims 1, 2 and 3, characterized in that, into the cavity (6), during calibration of the device, a gas is introduced at a pressure equal to the pressure to which the tyre (11) is inflated, in such a way as to balance the pressure inside and outside the bellows.

5. Device for monitoring the pressure of pneumatic tyres as in claims 1 and 2, characterized in that a safety valve (8) is disposed between the coupling (3) and the inside of the bellows (4); the valve has the function of shutting off communication between the inside of the tyre and the inside of the bellows in order to prevent the tyre from deflating, in the event of breakage of the device.

6. Device for monitoring the pressure of pneumatic tyres as in claims 1 and 2 characterized in that the induction coil (10) is mounted on a fixed part of the vehicle's suspension along the same axis as the longitudinal axis of the device and hence of the bellows (4) and magnet (5).

7. Device for monitoring the pressure of pneumatic tyres as in claims 1, 2 and 6 characterized in that the induction coil (10) is connected to a microprocessor which analyses the data and transmits them to an illuminated display which indicates the state of equilibrium, or absence thereof, of the tyre, and/or activates an acoustic signal should the tyre pressure stray outside the pressure range with which the sensor device (4) has been calibrated.
